# EUROPEAN PATENT SPECIFICATION

(11) **EP 1 460 230 B1**
(45) Date of publication and mention of the grant of the patent: **13.09.2006**
(21) Application number: 02803816.4
(22) Date of filing: 27.11.2002
(51) Int. Cl.: E05F 15/14, B66B 13/14

(54) **DEVICE FOR ACTUATING AND CONTROLLING DOORS IN GENERAL**
VORRICHTUNG ZUR BETÄTIGUNG UND STEUERUNG VON TÜREN IM ALLGEMEINEN
DISPOSITIF D'ACTIONNEMENT ET DE COMMANDE DE PORTES EN G N RAL

(30) Priority: 28.11.2001 ES 200102640
(43) Date of publication of application: 22.09.2004
(73) Proprietor: Iranzo Gonzalez, José Joaquin, 31200 Estella (ES)
(72) Inventor: Iranzo Gonzalez, José Joaquin, 31200 Estella (ES)
(86) International application number: PCT/ES2002/000560
(87) International publication number: WO 2003/046322

(56) References cited:
- EP-A2- 0 677 475
- ES-T3- 2 080 609
- ES-T3- 2 133 424
- US-A- 4 563 625

## Description

### OBJECT OF THE INVENTION

The present specification refers to a patent application corresponding to a general door actuation and control device, such as for opening and closing elevator or lifting apparatus doors, incorporating an electric induction motor implemented with an encoder which is constituted of a mechanical part and another optical part, provided with an electronic board where the different inputs and outputs required by the equipment for actuating and controlling the doors will be connected.

### FIELD OF THE INVENTION

The application of this invention is within the industry dedicated to the manufacture of general control devices.

### BACKGROUND OF THE INVENTION

The applicant knows of the current existence of different apparatuses, devices and auxiliary elements intended for the general actuation and control of doors, all of them being constituted of a plurality of constituent elements thereof duly connected together, forming an assembly of differentiated elements.

By European Patent EP 0677475 regarding an apparatus and method for the control of elevator doors, it is shown that, in relation to the invention disclosed in this specification, it is not shaped as a compact assembly, nor does it use two quadrature impulse readers for controlling movement of the door.

By US Patent 4,563,625, an invention is known in relation to the object disclosed in this specification, which does not use a three-phase alternating current motor, nor is it a compact assembly.

By European Patent application number 93903165.4, published in Spain with number 2,080,609, with priority DE 9,202,631, an assembly is known for the supervision of power of a sliding door which, provided with a drive motor fed by a feed source with a digital impulse generator, as well as with an impulse analyzing unit and a processing system prepared for processing the impulse analyzing device signals for the purpose of showing the position of the door, it is characterized by the incorporation of a motor current detecting element, especially linked to an analog/digital converter and a controller for checking the force used and from that, the kinetic energy of the sliding door.

However, with regard to the description being made in this specification, it is shown that it is configured as a motor current detector for checking the forces of the motor as well as the kinetic energies.

By Spanish Patent published in Spain with number 2,133,424, corresponding to European Patent application number 94101255.1 relating to a process for controlling the movement of doors, it must be indicated that a mathematical process is claimed therein for softening the movement of the doors, and accordingly, bears no identity whatsoever with the invention disclosed herein.

The applicant has no knowledge of the current existence of a general door actuation and control device formed by a single block inside of which all the elements forming it are integrated.

### DESCRIPTION OF THE INVENTION

The general door actuation and control device proposed by the invention is configured as an evident novelty within its specific field of application, since all the constituent elements of the invention are integrated in a single block, and they cannot be separated in order for the assembly to work since the mechanical part of the encoder is located on the motor shaft, and connected to its rear part, and the movement reader of the encoder is connected to the electronic circuit, which determines an inseparable assembly in order to provide a compact device with the minimum cost of interconnecting the different parts of the invention.

More specifically, the general door actuation and control device object of the invention is constituted of a three-phase motor, an encoder, an electronic board and an optical encoder reader.

The motor is configured as a poly-phase induction motor with several pairs of poles, and although this description refers to a motor with six pairs of poles, the invention can incorporate a higher and lower number, a motor with six pairs of poles having been chosen so that the rotational speed is suitably reduced, the motor being able to be any other type of those fed by electric current, such as continuous current, variable reluctance, etc.

The encoder has two parts, one of them being the mechanical-type element providing different grooves so that an optical reader can be provided with the different impulses during the rotation of the motor and to thus be able to determine the angular travel of the motor shaft.

The encoder grooves pass by several optical readers in order to be able to transform the angular movement of the motor shaft into impulses, and the encoder is of the quadrature type so that the direction of the door is known at all times.

The encoder can obviously be of any type, including magnetic.

With regard to the electronic board, its should be indicated that on one hand, its purpose is to provide the invention with the relevant feed for the poly-phase induction motor by means of a PWM generator providing the different voltage and frequency points in order to vary the speed of the motor and optimize the consumption thereof by supplying suitable power at every work point with a minimum consumption.

At the same time, the electronic board controls the movement of the door and the inputs-outputs in order to know at all times the position of the door and the intentions of the central maneuver control, such as an elevator, for the purpose of actuating the opening and closing with the speed adjusted to the size thereof, to its position, to the order received, etc., and in turn to communicate the situation of the door, the maneuver being carried out, etc.

### DESCRIPTION OF THE DRAWINGS

In order to complement the description that is being made and for the purpose of helping to better understand the features of the invention, a set of drawings is attached to the present specification as an integral part thereof which, with an illustrative and non-limiting character, shows the following:
Figure 1 shows an elevational view of the object of the invention which schematically shows the three-phase motor, the encoder and the shaft corresponding to the general door actuation and control device object of the invention.
Figure 2 shows a close-up view of the area of the object shown in figure 1 where the optical reader of the encoder and the electronic board are located.
Figure 3 lastly shows a block diagram where the different components of the invention are detailed.

### PREFERRED EMBODIMENT OF THE INVENTION

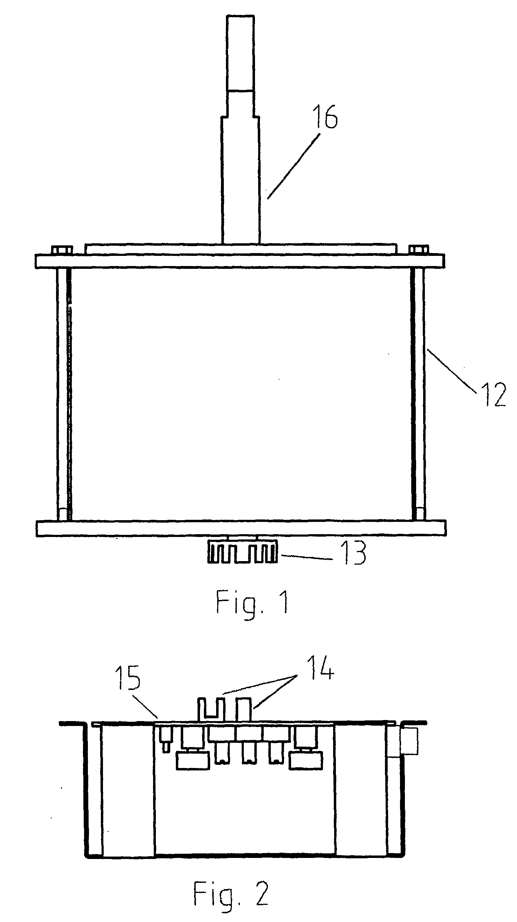

In view of figure 1, it can be seen how the general door actuation and control device is constituted of a three-phase motor (12), an encoder (13) and a shaft (16) of the motor (12), whereas figure 2 shows the optical reader (14) of the encoder (13), as well as the electronic board (15).

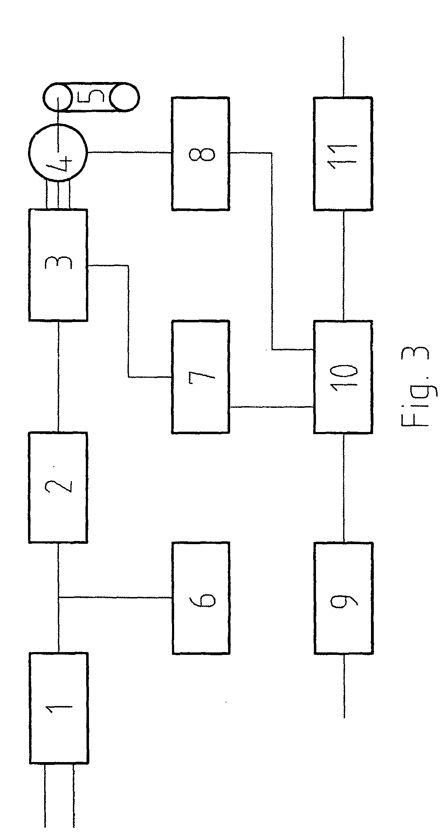

Continuing with figure 3, it is seen how the invention is provided with a filtering block (1), which receives the single-phase supply and has the function of protecting against network disturbances, and on the other hand filtering the assembly against electromagnetic noises, accordingly ensuring both the emission as well as the immunity against the noises according to the parameters permitted in the legislation in force on this matter.

The block referenced with (2) corresponds to the power feed block and, together with power stage (3) and the PWM modulator generator (7), provides the current with the suitable voltage and frequency value required by the three-phase motor (4) at each instant, it being necessary to indicate that block (5) corresponds to the mechanical actuation block of a door, for example, of an elevator.

Block (6) provides the suitable supply voltage to the different stages of the electronic control board and to the output and input.

The microcontroller block (10) is responsible for the interpretation of all the input and output signals and for furthermore generating the necessary codes in order to achieve, through the PWM modulator and generator (7) and the power stage (3), that the necessary current is generated in the motor (12) for its actuation, at all times depending on the maneuver to be carried out and the working point.

On the other hand, through block (8), configured as a quadrature encoder block, the position of the door controlled at all times will always be known, and furthermore, that the movement and direction thereof is according to what is expected, and if it were not in said manner, it acts accordingly, such as braking the door in the case of an obstacle, photocell, etc.

According to the aforementioned, it is shown that the invention is configured as a closed-loop device which is under control at all times.

Blocks (9) and (11) correspond to the input and output blocks, and with them, on one hand the orders are received as to what must be carried out, and on the other, the necessary information is supplied to the maneuver panel of the elevator so that it can make its decisions, being able to visualize the state of the maneuver, the action it is carrying out and the state of the equipment.

Lastly, the invention can incorporate the classic learning controls of door size and type, test, opening and closing curve selectors, re-opening by photocell or obstacle, etc.

## Claims

1. A general door actuation and control device **characterized by** being constituted of a single-phase current fed single-block body and provided with a three-phase motor (12) or any other type of motor fed by electric current, an encoder (13), a shaft (16) of the motor (12), as well as an electronic board (15) and an optical reader (14) of the encoder (13), the mechanical part and the encoder movement reader being on the shaft (16) of the motor (12) and connected with its rear part, which encoder movement reader is connected to the electronic circuit or board (15), being provided with a filtering block (1), a feed block (2), a power stage block (3), a PWM modulator generator (7), a block (4) of the three-phase motor (12), a mechanical actuation block (5), a supply voltage block (6), a microcontroller block (10), a block (8) for the quadrature encoder and two input and output blocks (9) and (11).

## Patentansprüche

1. Vorrichtung zur Betätigung und Steuerung von Türen im Allgemeinen, die **dadurch gekennzeichnet ist, dass** sie auf einem Monoblock-Körper basiert, der mit einphasigem Strom versorgt wird und mit einem Drehstrommotor (12) oder einer anderen Art, mit elektrischem Strom gespeisten Motor, einem Encoder (13), einer Motorwelle (16) sowie einer Elektronikplatte (15) und einem optischen Lesegerät (14) des Encoders (13) ausgestattet ist, wobei sich auf der Motorwelle (16) und an deren Rückseite gekuppelt die Mechanik und der Bewegungsleser des Enconders befindet, der an die Schaltung bzw. die Elektronikplatte (15) gekuppelt ist, ausgestattet mit einem Filterblock (1), einem Versorgungsblock (2), einem Leistungsstufenblock (3), einem Generator/Modulator PWM (7), einem Block (4) des Drehstrommotors (12), einem Block (5) des mechanischen Antriebs, einem Block der Versorgungsspannung (6), einem Block der Mikrosteuerung (10), einem Block (8) für den Quadraturencoder und zwei Blöcken (9) und (11) für Eingang und Ausgang.

## Revendications

1. Dispositif d'actionnement et de commande de portes en général, **caractérisé par**: constitution à partir d'un corps monobloc alimenté en courant monophasé et doté d'un moteur triphasé (12) ou de tout autre type de moteur alimenté par courant électrique, un codeur (13), un axe (16) du moteur (12), ainsi qu'une plaque électronique (15) et un lecteur optique (14) du codeur (13). L'axe (16) du moteur (12) est solidaire dans sa partie arrière de la partie mécanique et du lecteur de mouvement du codeur, lequel est solidaire du circuit ou plaque électronique (15). L'ensemble comporte un bloc de filtrage (1), un bloc d'alimentation (2), un bloc d'étape de puissance (3), un générateur-modulateur PWM (7), un bloc (4) du moteur triphasé (12), un bloc (5) d'entraînement mécanique, un bloc de tension d'alimentation (6), un bloc microcontrôleur (10), un bloc (8) pour le codeur en quadrature et deux blocs (9) et (11) d'entrée et de sortie.
